# EUROPEAN PATENT APPLICATION

(11) **EP 4 027 541 A1**
(43) Date of publication of application: **13.07.2022**
(21) Application number: 20862904.8
(22) Date of filing: 01.09.2020
(51) Int. Cl.: H04B 15/02

(54) **USB SIGNAL SHIELDING DEVICE AND NETWORK TERMINAL**

(30) Priority: 12.09.2019 CN 201910861251
(71) Applicant: ZTE Corporation, Shenzhen, Guangdong 518057 (CN)
(72) Inventor: XU, Jun, Shenzhen, Guangdong 518057 (CN)
(74) Representative: Swindell & Pearson Limited
(86) International application number: PCT/CN2020/112904
(87) International publication number: WO 2021/047428

(57) **Abstract**

A USB signal shielding device and a network terminal. The shielding device comprises: a CPU shielding module, which is configured to shield USB signals emitted by a CPU (20) and by USB surface layer wirings (31) and layer change vias (33) that lead out from the CPU (20); and an interface shielding module, which is configured to shield USB signals emitted by a USB interface (40) and by USB surface layer wirings (34), a component, and layer change vias (36) on the USB interface (40) side. The network terminal comprises a printed circuit board (10), a CPU (20) and USB interface (40) which are mounted on the printed circuit board (10), and the described shielding device.

## Description

### CROSS-REFERENCE TO RELATED APPLICATION

This application is filed on the basis of the Chinese Patent Application No. 201910861251.1, filed on September 12, 2019, and claims priority of the Chinese Patent Application, the entire contents of which are incorporated herein by reference.

### TECHNICAL FIELD

The present invention relates to the communication technology, and more specifically, to a USB signal shielding apparatus and a network terminal.

### BACKGROUND

Driven by the increasing resolution and improved storage performance of consumer electronics, broadband internet connections are expected to implement media applications in a wider range, and users also require performance of faster transmission to simplify download, storage, and sharing of a large amount of multimedia content. USB 3.0 plays a vital role in providing consumers with simple connectivity required by the consumers.

With the development of smart home terminals, more network terminal devices such as household wireless routers and gateways need to be equipped with USB 3.0 interfaces. However, during use of USB 3.0, noise in a 2.4G band is raised by nearly 20 dB, causing radio frequency interference to a 2.4 GHz ISM band (Industrial Scientific Medical Band). Such interference reduces wireless receiving sensitivity, and further reduces a range of reception. This affects normal use of a wireless device, and severely affects user experience of wireless internet through WIFI. Actually, spread spectrum processing of USB 3.0 causes a spectrum of USB 3.0 ranging from 0 Hz to 5 GHz. According to Intel measurement, an interference power decreases as a frequency increases. The interference power is about -60 dBm in the 2.4G band, and is only -90 dBm in a 5G band. The noise generated by high-frequency communication of USB 3.0 is broadband noise that cannot be filtered and eliminated, and the noise falls within a commonly used band ranging from 2.4 to 2.5 GHz. This has become a design difficulty in the WIFI industry.

Currently, design schemes used by a network terminal with a USB 3.0 interface in 2.4 GHz WIFI are as follows.

First scheme: No special design is made. During use of USB 3.0, 2.4 GHz reception is interfered, and wireless internet experience is severely affected.

Second scheme: It is claimed to support USB 3.0, but actual product software has disabled this function and is actually in a rate of USB 2.0. Although no interference is caused, user experience of using the USB is affected.

Third scheme: By reducing the USB 3.0 signal amplitude and spread spectrum, the interference to WIFI is reduced as much as possible. However, some indicators cannot be met for USB 3.0 performance, and quality risks occur.

Fourth scheme: A dedicated control module is made, to control work of USB 3.0 by detecting a WIFI working status. This manner is complex in design, high in cost and difficult in productization. In addition, intra-frequency interference cannot be completely resolved through control. This is an evasion manner, affecting a USB transmission effect.

### SUMMARY

The following is a summary of the subjects described in this specification in detail. The summary is not intended to limit the protection scope of the claims.

An embodiment of the present invention provides a USB signal shielding apparatus, including: a CPU shielding module, configured to shield USB signals emitted by a CPU, a USB top-layer wiring that is led out from the CPU, and a layer-changing via; and an interface shielding module, configured to shield USB signals emitted by a USB interface and by a USB top-layer wiring, a component, and a layer-changing via that are on a side of the USB interface.

An embodiment of the present invention further provides a network terminal, including a printed circuit board and a CPU and a USB interface that are mounted on the printed circuit board. The network terminal further includes the USB signal shielding apparatus according to the embodiment of the present invention.

Other aspects may be apparent upon reading and understanding the accompanying drawings and detailed descriptions.

### BRIEF DESCRIPTION OF DRAWINGS

FIG. 1 is a schematic diagram of a USB signal shielding apparatus according to an embodiment of the present invention;
FIG. 2 is a cross-section view of related parts of a CPU shielding module in FIG. 1;
FIG. 3 is a right view of related parts of a USB interface shielding module in FIG. 1;
FIG. 4 is a structural diagram of a USB signal shielding apparatus according to another embodiment of the present invention;
FIG. 5 is a structural diagram of a USB interface shielding module in FIG. 4, omitting a sealing element;
FIG. 6 is a structural diagram of a USB interface shielding module in FIG. 4, showing a sealing element;
FIG. 7 is a schematic diagram of a USB signal shielding apparatus according to another embodiment of the present invention; and
FIG. 8 is a right view of related parts of a third metal shielding cover in a USB signal shielding apparatus according to another embodiment of the present invention.

### DETAILED DESCRIPTION

This application describes a plurality of embodiments, but the descriptions are illustrative rather than limiting. It is obvious to a person having ordinary skilled in the art that there may be more embodiments and implementation schemes within the scope included in embodiments described in this application. Although many possible combinations of features are shown in the accompany drawings and discussed in particular implementations, many other combination manners of the disclosed features are possible. Unless specifically limited, any feature or element in any embodiment may be used in combination with or in place of any other feature or element in any other embodiment.

For a network terminal such as a household gateway or router with a USB 3.0 interface and a 2.4G WIFI function, to avoid interference from a USB 3.0 signal to 2.4 GHz WIFI, a seat of the USB 3.0 interface may be considered to be shielded. However, the inventor of the present invention finds through research that, although shielding the seat of the USB 3.0 interface can effectively avoid radiation of the USB 3.0 signal of the USB interface, reduction of noise interference of an entire product is limited because a source end of USB 3.0, that is, a CPU, and a USB outlet wiring are not processed.

Therefore, an embodiment of the present invention provides a USB signal shielding apparatus, including:
a CPU shielding module, configured to shield USB signals emitted by a CPU, a USB top-layer wiring that is led out from the CPU, and a layer-changing via; and
an interface shielding module, configured to shield USB signals emitted by a USB interface and by a USB top-layer wiring, a component, and a layer-changing via that are on a side of the USB interface.

In an embodiment of the present invention, the USB signal is a USB signal of a USB 3.0 standard, that is, a USB 3.0 signal. However, in another embodiment, the USB signal may alternatively be a USB signal of a subsequent standard of USB 3.0. For example, with the development of the USB, a standard frequency subsequently becomes higher. This may cause interference to WIFI in a 5 GHz band. When the USB signal is a USB 3.0 signal, the USB interface is a USB 3.0 interface, and the USB wiring is a USB 3.0 wiring.

The USB signal shielding apparatus according to this embodiment of the present invention may effectively shield USB signals, for example, shield USB signals of USB 3.0 and a subsequent standard. In addition, the apparatus is simple in structure, low in cost and easy in productization.

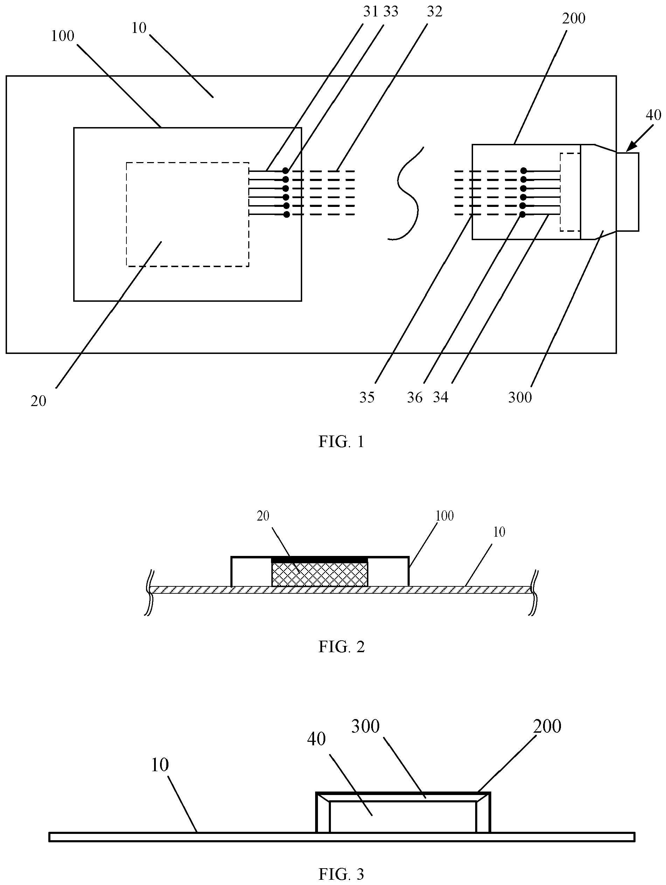

In an embodiment of the present invention, as shown in FIG. 1 and FIG. 2, the CPU shielding module includes a first metal shielding cover 100. The first metal shielding cover 100 is disposed on a printed circuit board (PCB) 10 and covers a CPU 20, a USB top-layer wiring 31 that is led out from the CPU 20, and a layer-changing via 33.

As shown in FIG. 1 and FIG. 2, the CPU 20 is mounted on the PCB 10 of a network terminal, but a package of the CPU 20 does not shield the USB signal. After a USB differential wiring is led out from the CPU 20, the USB differential wiring needs to be switched from top-layer (Top-layer) to inner-layer. The solid line led out from the CPU in the figure represents the USB top-layer wiring 31, the dashed line connected to the solid line through the layer-changing via 33 represents a USB inner-layer wiring 32, and the layer-changing via 33 is represented by a black dot. FIG. 2 is a cross-section view of related parts of the first metal shielding cover 100 in FIG. 1, omitting USB wirings.

High-speed wiring of the PCB in open space generates electromagnetic radiation into the space. When impedance is discontinuous, for example, at the layer-changing via, the radiation increases. In this example, the USB top-layer wiring and the layer-changing via are all disposed in the first metal shielding cover 100, to reduce the radiation as much as possible. On one hand, the first metal shielding cover 100 may shield the USB signal radiated by the USB top-layer wiring. On the other hand, the first metal shielding cover 100 may shield the USB signal radiated by the CPU chip. A thermal pad may be added between the surface of the CPU 20 and the first metal shielding cover 100 to guide heat of the CPU to the first metal shielding cover 100, or a heat sink may be attached to the first metal shielding cover 100 to increase heat dissipation.

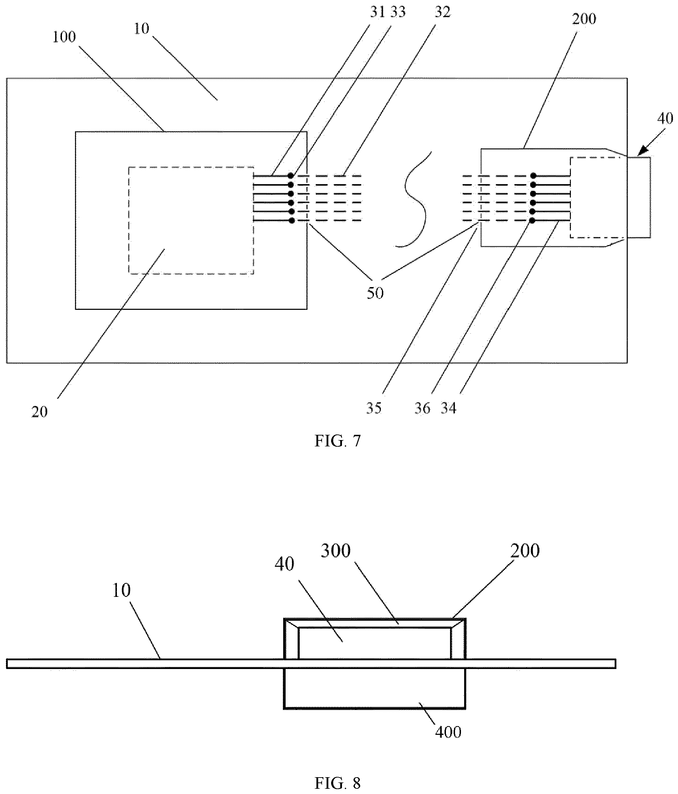

The first metal shielding cover 100 is connected to a ground layer of the PCB, for example, by welding. The first metal shielding cover 100 should not be slotted as much as possible, to avoid leakage of interference signals. In an example, the first metal shielding cover 100 is of a fully enclosed structure, that is, not slotted. The wiring entering and exiting the CPU 20 needs to be switched between an inner layer and a top layer when the wiring passes through the first metal shielding cover 100. In another example, as shown in FIG. 7, a small quantity of opening slots 50 are provided on a side surface of the first metal shielding cover 100 to facilitate wiring, but a width of the opening slot 50 is less than one-twentieth of a USB signal wavelength, to reduce leakage of interference signals. In an actual implementation process, one-twentieth is a minimum requirement, and a smaller width of the opening slot 50 indicates a better shielding effect and greater attenuation of noise signals.

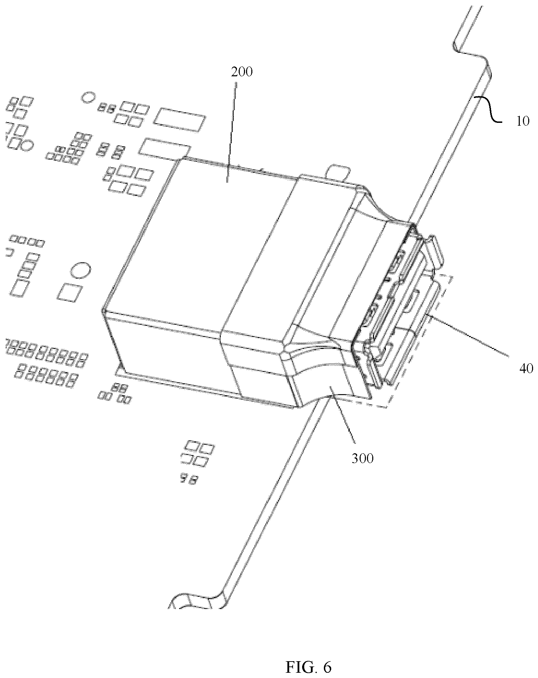

In an example shown in FIG. 6, the CPU shielding module is a fully enclosed first metal shielding cover 100. Different from FIG. 1 in that, a CPU 20 and a USB interface 40 in FIG. 6 are designed on different surfaces of a PCB. Therefore, the first metal shielding cover 100 used to cover the CPU 20 and the USB interface 40 are also located on different surfaces of the PCB. However, in the example shown in FIG. 1, the CPU and the USB interface are on a same surface of the PCB, and the first metal shielding cover 100 and the USB interface 40 are also located on a same surface of the PCB.

In an embodiment of the present invention, as shown in FIG. 1 and FIG. 3, when a USB differential wiring (also referred to as a USB wiring) is switched from an inner layer to a top layer, to connect the USB interface 40, there is a section of wiring on the top layer, to add coupling capacitors of the USB signal or to add electro-static discharge (ESD) protection components. A layer-changing via and a top-layer wiring of the USB differential wiring need to be covered by a metal shielding cover. Impedance discontinuity exists in the components (such as the coupling capacitors) and a weld between the USB top-layer wiring and a USB interface pin, and electromagnetic radiation is particularly serious. Therefore, the interface shielding module in this embodiment includes a second metal shielding cover 200 and a sealing element 300. The second metal shielding cover 200 is disposed on the PCB 10 and covers a USB top-layer wiring 34, a component (not shown in the figure), and a layer-changing via 36 that are on a side of the USB interface 40, and a part of the USB interface 40. The layer-changing via 36 is used to connect the USB top-layer wiring 34 and a USB inner-layer wiring 35.

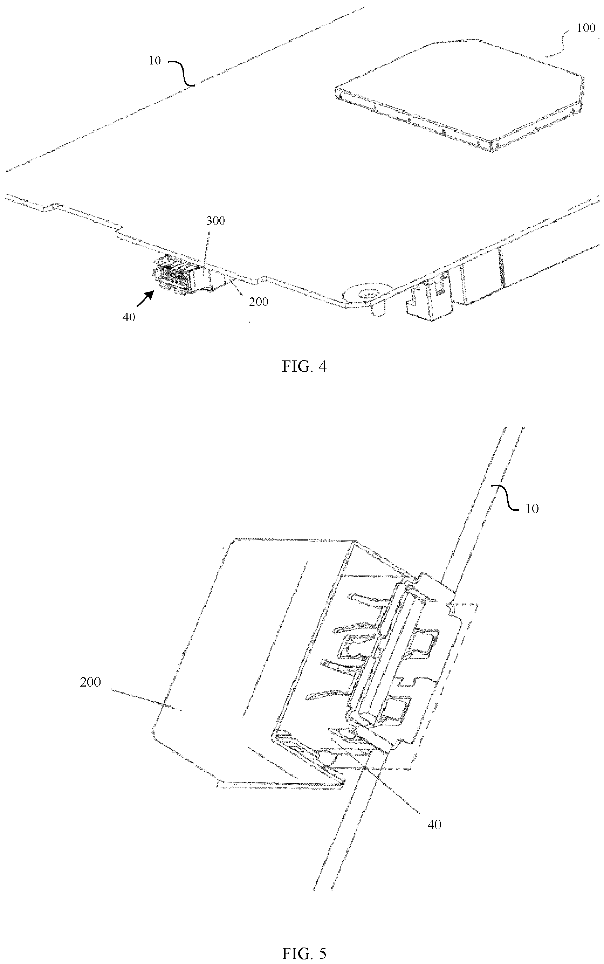

For ease of showing the structure of the second metal shielding cover 200 and the USB interface 40, the sealing element 300 is omitted in FIG. 5. As shown in the figure, because the second metal shielding cover 2 needs to reserve an opening for the USB interface 40, one side (the right side shown in the figure) of the second metal shielding cover 200 is provided with an opening, and the USB interface 40 protrudes from the opening. In the example shown in the figure, a gap is left between the USB interface 40 and the second metal shielding cover 200. Specifically, assembly gaps may be left between the second metal shielding cover 200 and the USB interface 40 in three directions: a left direction, a right direction, and an upper direction. However, this causes a large quantity of USB signals to leak out of the gaps. Therefore, the sealing element 300 is required. FIG. 3 and FIG. 6 show an interface shielding module that exists after the sealing element 300 is added. The sealing element 300 is configured to seal the gap between the USB interface 40 and the second metal shielding cover 200, to prevent the USB signal from leaking outward from the gap.

In an example, a plurality of sealing elements 300 are provided, and two ends of each of the plurality of sealing elements 300 are respectively pasted and adhered to the USB interface 40 and the second metal shielding cover 200, to seal an upper gap, a left gap, and a right gap between the USB interface 40 and the second metal shielding cover 200. The sealing element 300 is made of a soft metal sheet, a conductive cloth, or a wave-absorbing material. In the example shown in FIG. 6, to facilitate production operations, a metal copper foil is cut into three pieces in advance, that is, three sealing elements are prepared, which are respectively adhered to left, right, and upper connections between the second metal shielding cover 200 and the USB interface 40, to seal the left gap, the upper gap, and a lower gap, at the opening, between the second metal shielding cover 200 and the USB interface 40. In an example, the three pieces of copper foil are rectangular in shape, and copper foil sizes are respectively 13 mm^{∗} 10 mm, 13 mm^{∗} 10 mm, and 24 mm^{∗} 10mm. However, it is easy to understand that both a quantity and a shape of copper foils may change, provided that these copper foils can seal gaps in various places after the copper foils are pasted and adhered to the USB interface 40 and the second metal shielding cover 200. The copper foil may alternatively be replaced by an aluminum foil, a conductive cloth, or a wave-absorbing material.

The copper foil may alternatively be replaced by a conductive cloth or a wave-absorbing material.

In another embodiment of the present invention, the interface shielding module includes a second metal shielding cover. The second metal shielding cover is disposed on the PCB and covers a USB top-layer wiring, a component, and a layer-changing via that are on a side of the USB interface, and a part of the USB interface, and the USB interface protrudes from an opening on one side of the second metal shielding cover. Different from the foregoing example in that, a metal seat of the USB interface is in mutual contact with the second metal shielding cover except a bottom surface (as shown in FIG. 7). In this case, the sealing element 300 is not required.

In an embodiment of the present invention, the second metal shielding cover 200 is connected to a ground layer of the PCB, for example, by welding. The second metal shielding cover 200 should not be slotted as much as possible except one side with an opening, to avoid leakage of interference signals. In an example, one side of the second metal shielding cover 200 is provided with an opening, and other sides and the top are of an enclosed structure, that is, are not slotted, as shown in FIG. 5. As shown in FIG. 6, the metal seat of the USB interface 40, the second metal shielding cover 200, and the sealing element 300 in the interface shielding module are connected to one another to form a conductive shielding entirety, which can effectively prevent leakage of USB signals. However, in another example, as shown in FIG. 7, one side of the second metal shielding cover 200 is provided with an opening, other sides each are provided with an opening slot 50, and a width of the opening slot 50 is less than one-twentieth of a USB signal wavelength.

In the example shown in the figure, the metal seat of the USB interface 40 is of an SMT mount type, in other words, is mounted by using a surface mounted technology (SMT). A ground pin of the metal seat is fully grounded and a ground is completed laid under an interface seat, to reduce leakage of USB signals. However, in another example, the metal seat of the USB interface 40 is mounted by using a non-SMT, for example, a plug-in USB interface. In this case, a USB differential pin is welded on the back of the PCB by passing through all layers, and the pin is exposed to the back to contact the air for signal radiation. Therefore, as schematically shown in FIG. 8, the shielding apparatus in the example may further include a third metal shielding cover 400 disposed on the PCB. The third metal shielding cover 400 is of a fully enclosed structure, the third metal shielding cover 400 and the metal seat of the USB interface are located on different sides of the PCB, and the third metal shielding cover 400 covers all USB wiring pins related to the USB interface. In this way, the USB signal wiring pin (where impedance is discontinuous) is prevented from radiating interference signals outward.

An embodiment of the present invention further provides a network terminal, including a printed circuit board and a CPU and a USB interface that are mounted on the printed circuit board. The network terminal further includes the USB signal shielding apparatus according to any embodiment (including the example) of the present invention. As shown in the example in FIG. 1, each USB wiring between the CPU shielding module and the interface shielding module is an inner-layer wiring. A layer-changing via and top-layer wiring are all arranged in a metal shielding cover.

The USB signal shielding apparatus in the embodiment of the present invention used by the network terminal in the embodiment of the present invention, may be used in a network terminal such as a household gateway or router with a USB 3.0 interface and a 2.4G WIFI function, to basically eliminate interference from a USB 3.0 signal to 2.4 GHz WIFI.

In an example, a USB signal is a USB signal of USB 3.0 or a subsequent standard, and the network terminal further includes a communication module of which the communication band overlaps the USB signal. The network terminal may be, for example, a household gateway or router with a USB 3.0 interface and a 2.4G WIFI function, but this is not limited thereto. Antennas of a 2.4 GHz device (such as WIFI, BT, or Zigbee) should be far away from the USB 3.0 interface as much as possible.

According to comparison and actual measurement, when an external USB 3.0 device is connected, the network terminal in this embodiment of the present invention may improve WIFI air interface sensitivity by more than 10 dB. The WIFI air interface sensitivity only deteriorates by less than 1 dB compared with a case in which the USB 3.0 device is not added, and this almost does not affect normal work of 2.4 GHz WIFI. In all tests, the external USB 3.0 device needs to be shielded, to avoid impact of a design defect of the external USB 3.0 device on this product.

In the embodiment of the present invention, the USB signal shielding apparatus is designed on the network terminal, and the embodiment may be applied to a network terminal such as a household gateway or router with a USB 3.0 interface, to basically eliminate interference of USB 3.0 to 2.4 GHz WIFI. In addition, the shielding apparatus is simple in design, low in cost, and easy in productization.

In descriptions of this disclosure, terms such as "mounted", "connected", "connection", and "fixed" should be understood on a broad sense. For example, "connection" may be a fixed connection, a detachable connection, or an integral connection. The "connected" may be directly connected, or may be indirectly connected through an intermediate medium. A person having ordinary skill in the art may understand specific meanings of the foregoing terms in the present disclosure according to specific circumstances. In descriptions of this specification, terms such as "an embodiment", "some embodiments", and "specific embodiment" mean that specific features, structures, materials, or characteristics described with reference to the embodiment or the example are included in at least one embodiment or example in the present disclosure. In this specification, schematic expressions of the foregoing terms do not necessarily refer to the same embodiment or example. In addition, the described specific features, structures, materials, or characteristics may be combined in a suitable manner in any one or more embodiments or examples. Although implementations disclosed in the present disclosure are as described above, the content is merely an implementation used for ease of understanding, and is not intended to limit the present disclosure. Any person having ordinary skills in the art to which the present disclosure belongs may make any modification and change in an implementation form and implementation details without departing from the spirit and scope disclosed in the present disclosure, and still subject to the scope defined in the appended claims.

## Claims

1. A USB signal shielding apparatus, comprising:
a CPU shielding module, configured to shield USB signals emitted by a CPU, a USB top-layer wiring that is led out from the CPU, and a layer-changing via; and
an interface shielding module, configured to shield USB signals emitted by a USB interface and by a USB top-layer wiring, a component, and a layer-changing via that are on a side of the USB interface.

2. The shielding apparatus of claim 1, wherein
the CPU shielding module comprises a first metal shielding cover, wherein the first metal shielding cover is disposed on a PCB and covers the CPU, the USB top-layer wiring that is led out from the CPU, and the layer-changing via.

3. The shielding apparatus of claim 2, wherein
the first metal shielding cover is of a fully enclosed structure; or
the first metal shielding cover is provided with an opening slot on a side surface, and a width of the opening slot is less than one-twentieth of a USB signal wavelength.

4. The shielding apparatus of claim 1, 2, or 3, wherein
the interface shielding module comprises a second metal shielding cover and a sealing element, wherein
the second metal shielding cover is disposed on the PCB and covers the USB top-layer wiring, the component, and the layer-changing via that are on the side of the USB interface, and a part of the USB interface, the USB interface protrudes from an opening on one side of the second metal shielding cover, and a gap is left between the USB interface and the second metal shielding cover; and
the sealing element is configured to seal the gap between the USB interface and the second metal shielding cover.

5. The shielding apparatus of claim 4, wherein
a plurality of sealing elements are provided, and two ends of each of the plurality of sealing elements are respectively pasted and adhered to the USB interface and the second metal shielding cover, to seal an upper gap, a left gap, and a right gap between the USB interface and the second metal shielding cover; and the sealing element is made of a soft metal sheet, a conductive cloth, or a wave-absorbing material.

6. The shielding apparatus of claim 4, wherein
one side of the second metal shielding cover is provided with an opening, and other sides and the top are of an enclosed structure; or
one side of the second metal shielding cover is provided with an opening, other sides each are provided with an opening slot, and a width of the opening slot is less than one-twentieth of the USB signal wavelength.

7. The shielding apparatus of claim 1, 2, or 3, wherein
the interface shielding module comprises a second metal shielding cover, wherein the second metal shielding cover is disposed on the PCB and covers the USB top-layer wiring, the component, and the layer-changing via that are on the side of the USB interface, and a part of the USB interface, the USB interface protrudes from an opening on one side of the second metal shielding cover, and a seat of the USB interface is in mutual contact with the second metal shielding cover except a bottom surface.

8. The shielding apparatus of claim 1, 2, or 3, wherein
a seat of the USB interface is mounted by using a surface mounted technology, abbreviated as SMT; or
a seat of the USB interface is mounted by using a non-SMT, and the shielding apparatus further comprises a third metal shielding cover disposed on the PCB, wherein the third metal shielding cover is of a fully enclosed structure, the third metal shielding cover and the seat are located on different sides of the PCB, and the third metal shielding cover covers all USB wiring pins related to the USB interface.

9. The shielding apparatus of claim 1, 2, or 3, wherein
the USB signal is a USB signal of USB 3.0 or a subsequent standard.

10. A network terminal, comprising a printed circuit board and a CPU and a USB interface that are mounted on the printed circuit board, and further comprising the USB signal shielding apparatus of any one of claims 1 to 9.

11. The network terminal of claim 10, wherein
a USB signal is a USB signal of USB 3.0 or a subsequent standard, and the network terminal further comprises a communication module of which the communication band overlaps the USB signal.

12. The network terminal of claim 10 or 11, wherein
each USB wiring between a CPU shielding module and an interface shielding module is an inner-layer wiring.
